# EUROPEAN PATENT SPECIFICATION

(11) **EP 2 360 891 B1**
(45) Date of publication and mention of the grant of the patent: **28.08.2013**
(21) Application number: 09832909.7
(22) Date of filing: 03.12.2009
(51) Int. Cl.: H04L 29/08, H04W 4/08, H04L 29/12, H04W 4/02, H04L 29/06

(54) **Method for optimizing results returned from CBUS server and CBUS server**
Verfahren zur Optimierung von rückgesendeten Ergebnissen eines CBUS-Servers und CBUS-Server
Procédé pour optimiser les résultats renvoyés par un serveur CBUS, et serveur CBUS

(30) Priority: 15.12.2008 CN 200810183440
(43) Date of publication of application: 24.08.2011
(73) Proprietor: Huawei Device Co., Ltd., Longgang District Shenzhen Guangdong 518129 (CN)
(72) Inventor: CHANG, Xinmiao, Shenzhen Guangdong 518129 (CN); LIU, Haitao, Shenzhen Guangdong 518129 (CN)
(74) Representative: Pfenning, Meinig & Partner GbR
(86) International application number: PCT/CN2009/075288
(87) International publication number: WO 2010/069227

(56) References cited:
- WO-A1-2007/088589
- CN-A- 1 713 583
- CN-A- 1 860 477
- OPEN MOBILE ALLIANCE: "CBUSV1.0 RD adding text to introduction clause", INTERNET CITATION, 26 June 2008 (2008-06-26), pages 1-2, XP002659921, Retrieved from the Internet: URL:http://member.openmobilealliance.org/f tp/Public_documents/PAG/PAG-CBU S/2008/OMA-PAG-CBUS-2008-0002R01-CR_CBUSV1 .0_RD_adding_text_to_introd uction_clause.zip [retrieved on 2011-09-22]
- OPEN MOBILE ALLIANCE: "CBUSV1.0 RD adding text to enabler description clause", INTERNET CITATION, 12 June 2008 (2008-06-12), pages 1-7, XP002659922, Retrieved from the Internet: URL:http://member.openmobilealliance.org/f tp/Public_documents/PAG/PAG-CBU S/2008/OMA-PAG-CBUS-2008-0003-CR_CBUSV1.0_ RD_adding_text_to_enabler_d escription_clause.zip [retrieved on 2011-09-22]
- OPEN MOBILE ALLIANCE: "CBUS RD Use Case and Requirements", INTERNET CITATION, 11 June 2008 (2008-06-11), pages 1-3, XP002659923, Retrieved from the Internet: URL:http://member.openmobilealliance.org/f tp/Public_documents/PAG/PAG-CBU S/2008/OMA-PAG-CBUS-2008-0008-CR_Use_Case_ and_Requirements.zip [retrieved on 2011-09-22]

## Description

### FIELD OF THE INVENTION

The present invention relates to the field of telecommunication technologies, and in particular, to a condition based URIs selection (CBUS) server and a method for optimizing results returned from the CBUS server.

### BACKGROUND OF THE INVENTION

Uniform resource identifiers (URIs) define a standard system for identifying resources, as specified by RFC 3986 (Uniform Resource Identifier Generic Syntax) of the Internet Engineering Task Force (IETF). A URI is an extension to a uniform resource locator (URL) that is familiar to people. A URL is used for web browsers and other similar programs.

With the development of telecommunication technologies and diversification of future services, many services require that a user expected to join a session should be selected according to certain conditions during the setup of the session. Those conditions are based on various information owned by a user, such as presence information, location information, and interest and hobby information of the user.

In the prior art, different user information is stored on different servers; for example, presence information is stored on a presence server. Such information includes information that a user is Available, network bearer information, client application capability information, and interest and hobby information of a user. The location information specifies the current geographical locations of a user and is stored on the location server. For example, if a requester wants to obtain a list of users whose locations are near a shopping mall and whose statuses are Available, the requester needs to make judgment and selection according to the current presence information and geographical location information of users. The prior art provides only the following method: The requester first sends a request to the presence server to obtain URIs of users whose statuses are Available, and then sends a request to the location server to obtain URIs of users geographically located near the shopping mall. Then the requester makes comprehensive analysis on these users to obtain the users meeting both conditions, that is, the users whose locations are near the shopping mall and whose statuses are Available. Such operations require that the requester should send requests to different servers to obtain the user or users meeting the conditions and compare the returned results. In this case, the requester needs to know which server stores which information, and the terminal device of the requester should have the interfaces to different servers, which cause a great inconvenience to the requester.

The CBUS topic is proposed to overcome the foregoing disadvantage. A requester may send requests or conditions for obtaining geographical location information and presence information to a CBUS server, where the CBUS server is connected to various information servers. For example, the CBUS server obtains presence information from a presence server, obtains geographical location information from a location server, makes comprehensive analysis on these results, and sends the URI of a user meeting the conditions to the requester. Thereby, the requester does not need to directly interact with various servers and only needs to submit requests to the CBUS server.

The basic idea of CBUS is: making judgment according to some conditions submitted by the requester, obtaining information that meets the conditions from the corresponding information servers, analyzing and evaluating the information obtained from different servers and the conditions, evaluating and selecting the URI(s) of object(s) desired by the requester, and finally sending the evaluation results to the requester. The conditions submitted to the CBUS server by the requester may be predefined and stored on an XML document management (XDM) server or other file servers, or defined when a selection request is submitted. During the selection of a user by the CBUS, snapshots may be selected according to the conditions and range only, or user information is continuously monitored and a user are continuously reselected according to the updated user information so that updated selection results are obtained. Such monitoring may continue until the conditions are met, or continue within a specific time. In the request submitted to the CBUS server, the requester may specify the URIs of some individual users as a selection range or specify a group of URIs as the selection range. The requester may also not specify the selection range. A group of URIs is a set of URIs, and this group itself is also identified by a URI.

The prior art has the following disadvantages: In the prior art, if the request submitted to the CBUS server by the requester does not specify a specific URI selection range, or the specified selection range is one or more groups of URIs, the CBUS server executes the user request, and after evaluation, obtains a list of URI(s) meeting the selection conditions, but the list may include the URI of the requester or some URIs not desired by the requester. In most cases, the requester knows whether the requester meets the conditions set by himself or herself, for example, whether the requester is Available currently and whether the requester is located in Beijing, and therefore does not require the CBUS server to analyze and evaluate whether the URI of the requester meets the conditions set by the requester. If the returned results include the URI of the requester himself or herself, radio resources and CBUS server resources for execution processing are wasted. OMA document "CBUS V1.ORD" (XP002659322) discloses a CBUS system.

### SUMMARY OF THE INVENTION

Embodiments of the present invention provide a CBUS server and a method for optimizing results returned from the CBUS server, so that the URI selection results obtained by a requester from the CBUS server will not unnecessarily include a specific URI.

Embodiments of the present invention provide the following technical solution:

An embodiment of the present invention provides a method for optimizing results returned from a CBUS server, including:
receiving a request, submitted by a requester, for selecting a user, where the request for selecting a user carries selection conditions and settings for excluding a specific URI from the returned results;
performing evaluation to obtain a list of URI(s) meeting all the selection conditions according to the request for selecting a user;
evaluating whether the specific URI is included in the list of URI(s) meeting all the selection conditions, and if the specific URI is included in the list of URI(s) meeting all the selection conditions, deleting the specific URI from the list of URI(s), and obtaining a final list of URI(s) meeting requirements; and
returning the final list of URI(s) to the requester.

An embodiment of the present invention provides a CBUS server, including:
a request receiving unit, configured to receive a request, submitted by a requester, for selecting a user, where the request for selecting a user carries selection conditions and settings for excluding a specific URI from the returned results;
an evaluation information obtaining unit, configured to perform evaluation, according to the request for selecting a user, to obtain a list of URI(s) meeting all the selection conditions;
a URI evaluating unit, configured to: evaluate whether the specific URI is included in the list of URI(s) meeting all the selection conditions, and if the specific URI is included in the list of URI(s) meeting all the selection conditions, delete the specific URI from the list of URI(s), and obtain a final list of URI(s); and
a result returning unit, configured to return the final list of URI(s) to the requester.

It can be seen from the foregoing technical solution that, a specific URI is deleted from a list of URI(s) meeting all selection conditions, so that the final list of URI(s) obtained from the CBUS server by the requester does not unnecessarily include the specific URI, thus saving the CBUS server resources for execution processing and improving the user experience.

### BRIEF DESCRIPTION OF THE DRAWINGS

FIG. 1 is a flowchart of a method for optimizing results returned from a CBUS server according to a first embodiment of the present invention;
FIG 2 is a flowchart of a method for optimizing results returned from a CBUS server according to a second embodiment of the present invention;
FIG 3 is a flowchart of a method for optimizing results returned from a CBUS server according to a third embodiment of the present invention;
FIG. 4 is a schematic structural diagram of a CBUS server according to an eighth embodiment of the present invention; and
FIG 5 is another schematic structural diagram of the CBUS server according to the eighth embodiment of the present invention.

### DETAILED DESCRIPTION OF THE EMBODIMENTS

To better explain the objective, technical solution and merits of the present invention, the following describes the technical solution of the present invention in detail with reference to the embodiments and accompanying drawings.

### Embodiment 1

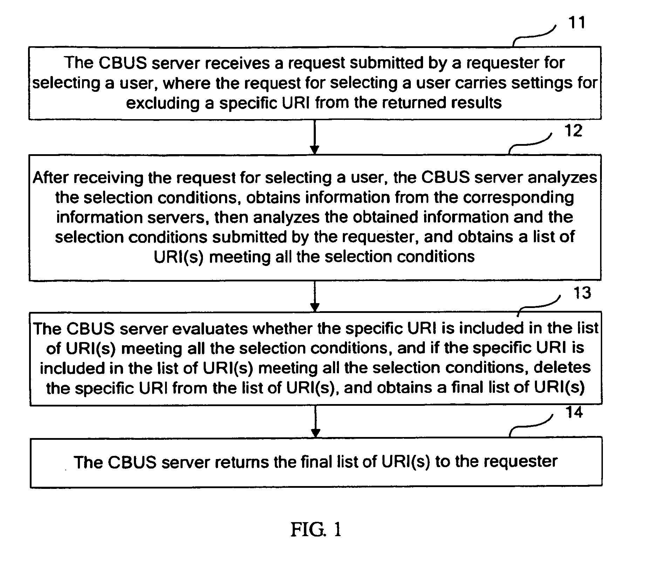

FIG 1 is a flowchart of a method for optimizing results returned from a CBUS server according to a first embodiment of the present invention. The method includes the following steps:

Step 11: The CBUS server receives a request, submitted by a requester, for selecting a user, where the request for selecting a user carries settings for excluding a specific URI from the returned results. The user may be identified by a URI, and the selection of a user may be the selection of a user URI.

The specific URI may be the URI of the requester or a URI that meets the selection conditions already known to the requester, for example, one or more URIs other than the URI of the requester.

It should be noted that, in the request, submitted to the CBUS server, for selecting a user, the requester may specify one or more groups of URIs as the selection range, and may also do not specify the selection range.

Step 12: After receiving the request for selecting a user, the CBUS server analyzes the selection conditions, obtains information from the corresponding information servers, then analyzes the obtained information and the selection conditions submitted by the requester, and obtains a list of URI(s) meeting all the selection conditions.

Step 13: The CBUS server evaluates whether the specific URI is included in the list of URI(s) meeting all the selection conditions, and if the specific URI is included in the list of URI(s) meeting all the selection conditions, deletes the specific URI from the list of URI(s), and obtains a final list of URI(s).

Step 14: The CBUS server returns the final list of URI(s) to the requester.

In the method for optimizing results returned from the CBUS server according to the first embodiment of the present invention, the request, submitted by a requester, for selecting a user carries settings for excluding a specific URI from the returned results, so that the final list of URI(s) obtained from the CBUS server by the requester does not include the specific URI, where the specific URI may be the URI of the requester or a URI that meets the selection conditions already known to the requester, thus saving the CBUS server resources for execution processing and improving the user experience.

### Embodiment 2

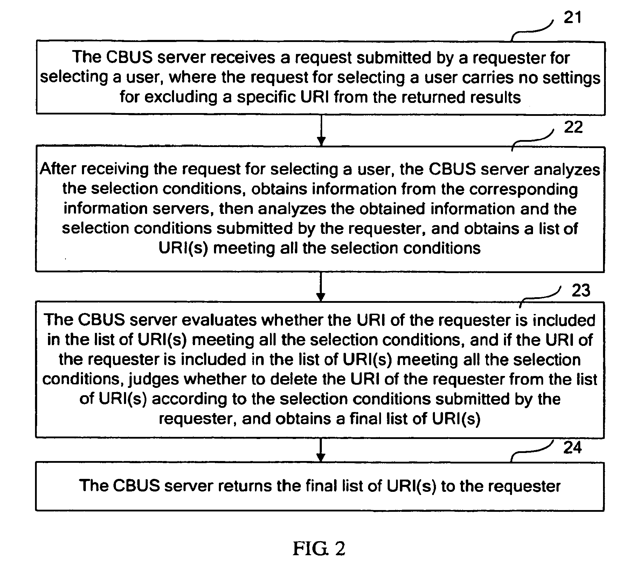

FIG. 2 is a flowchart of a method for optimizing results returned from a CBUS server according to a second embodiment of the present invention. The method includes the following steps:

Step 21: The CBUS server receives a request, submitted by a requester, for selecting a user, where the request for selecting a user carries no settings for excluding a specific URI from the returned results. The user may be identified by a URI, and the selection of a user may be the selection of a user URI.

It should be noted that, in the request submitted to the CBUS server, the requester may specify one or more groups of URIs as the selection range or does not specify the selection range.

Step 22: After receiving the request for selecting a user, the CBUS server analyzes the selection conditions, obtains information from the corresponding information servers, then analyzes the obtained information and the selection conditions submitted by the requester, and obtains a list of URI(s) meeting all the selection conditions.

Step 23: The CBUS server evaluates whether the URI of the requester is included in the list of URI(s) meeting all the selection conditions, and if the URI of the requester is included in the list of URI(s) meeting all the selection conditions, judges, according to the selection conditions submitted by the requester, whether to delete the URI of the requester from the list of URI(s), and obtains a final list of URI(s).

Step 24: The CBUS server returns the final list of URI(s) to the requester.

In the method for optimizing results returned from the CBUS server according to the second embodiment of the present invention, the CBUS server judges, according to the selection conditions submitted by the requester, whether to delete the URI of the requester from the obtained list of URI(s) meeting all the selection conditions, so that the requester can obtain a final list of URI(s) from the CBUS server, thus saving the CBUS server resources for execution processing and improving the user experience.

### Embodiment 3

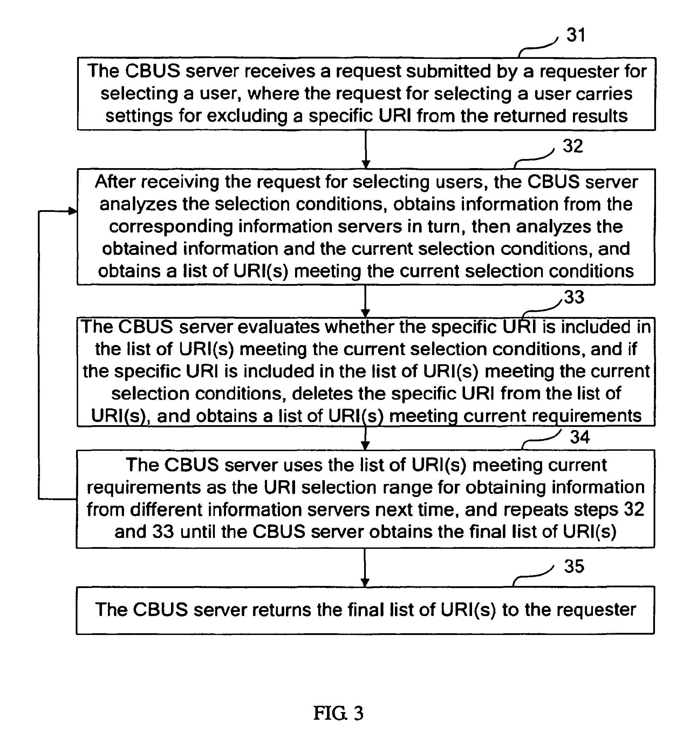

FIG 3 is a flowchart of a method for optimizing results returned from a CBUS server according to a third embodiment of the present invention. The method includes the following steps:

Step 31: The CBUS server receives a request, submitted by a requester, for selecting a user, where the request for selecting a user carries settings for excluding a specific URI from the returned results. The user may be identified by a URI, and the selection of a user may be the selection of user URIs.

The specific URI may be the URI of the requester or a URI that meets the selection conditions already known to the requester, for example, one or more URIs other than the URI of the requester.

It should be noted that, in the request submitted to the CBUS server, the requester may specify one or more groups of URIs as the selection range, and may also do not specify the selection range.

Step 32: After receiving the request for selecting a user, the CBUS server analyzes the selection conditions, obtains information from the corresponding information servers in turn, then analyzes the obtained information and the current selection conditions, and obtains a list of URI(s) meeting the current selection conditions.

Step 33: The CBUS server evaluates whether the specific URI is included in the list of URI(s) meeting the current selection conditions, and if the specific URI is included in the list of URI(s) meeting the current selection conditions, deletes the specific URI from the list of URI(s), and obtains a list of URI(s) meeting current requirements.

Step 34: The CBUS server uses the list of URI(s) meeting current requirements as the URI selection range for obtaining information from different information servers next time, and repeats steps 32 and 33 until the CBUS server obtains the final list of URI(s).

Step 35: The CBUS server returns the final list of URI(s) to the requester.

In the method for optimizing results returned from the CBUS server according to the third embodiment of the present invention, in the application scenario where the CBUS server needs to obtain a list of URI(s) meeting the current selection conditions from the corresponding information servers in turn, the request for selecting a user carries settings for excluding a specific URI from the returned results; after obtaining the list of URI(s) meeting the current selection conditions from the corresponding information servers in turn, the CBUS server evaluates the obtained list of URI(s) meeting the current selection conditions, deletes the specific URI to obtain a list of URI(s) meeting current requirements, and uses the UIR list as the URI selection range for obtaining information from different information servers next time. Thereby, the URI selection range of the CBUS server is narrowed gradually so that the requester can obtain a final list of URI(s) from the CBUS server, thus saving the CBUS server resources for execution processing and improving the user experience.

It should be noted that, in this embodiment, if the request, submitted to the CBUS server, for selecting a user carries no settings for excluding a specific URI from the returned results, the CBUS server still evaluates whether the URI of the requester is included in the list of URI(s) meeting all the selection conditions, and if the URI of the requester is included in the list of URI(s) meeting all the selection conditions, judges whether to delete the URI of the requester from the list of URI(s) according to the selection conditions submitted by the requester, and obtains a final list of URI(s).

The following describes the method for optimizing results returned from a CBUS server with reference to a specific embodiment.

### Example 1

Alice is a registered member of an online bookstore, and wants to find people who are Available currently and have read *Ghost* from all the registered members to exchange thoughts after reading.

Alice searches for a user meeting the conditions through the CBUS service, and sends a request for selecting a user to the CBUS server, where the request includes three conditions and does not specify the URI range for selection. The three conditions are:

| | |
|---|---|
| Condition 1 | Being registered member of the online bookstore |
| Condition 2 | Being Available currently |
| Condition 3 | Having read the novel *Ghost* |

The URI of the user returned from the CBUS server must meet all of the three conditions, that is, the search conditions of the CBUS server are: condition 1 AND condition 2 AND condition 3. At the same time, Alice knows that she herself certainly meets the three conditions. If the results meeting the conditions obtained by the CBUS server include only Alice, she does not expect the CBUS server to return such results. Therefore, Alice adds an additional condition to the request submitted to the CBUS server, that is, excluding herself in the results, namely, excluding the URI of herself: Sip:Alice@example.com. In this way, all the selection conditions received by the CBUS server are: condition 1 AND condition 2 AND condition 3 AND (Exclude Sip:Alice@example.com).

The CBUS server obtains a list of members of the online bookstore from the corresponding information server and the reading records of *Ghost,* selects the list of members who have read the novel, then obtains status information of the members from the presence server storing user status information, selects a list of available members from the status information, excludes the URI of Alice from the list according to the request of Alice, and if the list is not empty, returns the list to Alice; if the list is empty, returns information indicating no result meets the conditions to Alice.

### Example 2

Alice and her friends preset group A, and the group includes several friends who often chat together: Alice, Bob, Candy, David, Emily, and Frank. Group A is identified uniquely by URI Sip:Group1 @example.com on the network.

Because Alice expects to chat with friends who are currently Available, she sends a request for selecting a user to the CBUS server first, and the CBUS server selects friends who are currently Available from group A. The request submitted by Alice to the CBUS server includes a selection condition Status = Available and a group of URIs Sip:Group1 @example.com.

The CBUS server also obtains the URI of Alice: Sip:Alice@example.com while receiving the request of Alice. The CBUS server first obtains URIs of members in the group from the shared group XDM server storing information of group A according to the group of URIs: Sip:Group1@example.com.

| **Group A** | **Member** |
|---|---|
| Sip:Group1@example.com | Sip:Alice@example.com |
| | Sip: Bob@example.com |
| | Sip: Candy@example.com |
| | Sip: David@example.com |
| | Sip: Emily@example.com |
| | Sip: Frank@example.com |

After obtaining information of members in the group, the CBUS server obtains status information of the members from the presence server storing the member status information.

The CBUS server analyzes and evaluates the obtained member status information and the condition in the request, and obtains the following URIs of users meeting the condition: Sip:Alice@example.com and Sip:Bob@example.com; at the same time, the CBUS server analyzes the condition in the request and the URI of the requester; because the requester herself is certainly available and the requester can determine that she herself meets the condition, the CBUS server deletes the URI of Alice from the obtained list of URI(s), and obtains the final URI Sip:Bob@example.com to be returned to Alice.

After obtaining the URI returned from the CBUS server, Alice can initiate a session with Bob.

If only Alice is available in the member status information obtained by the CBUS server, the CBUS server does not need to return information indicating Alice is available to Alice, because Alice does not expect to obtain a meaningless result indicating Alice wants to chat with herself. Therefore, radio resources are saved and the user experience is improved in this embodiment.

### Example 3

Alice and Bob expect to pick out at least two members who are available and whose hobbies are bridge and bridge levels are middle from the existing two groups of URIs for selection and playing online bridge together. Alice selects their target candidates through the CBUS service. Alice submits a selection request to the CBUS server, including:
URI selection range: two groups of URIs:

| | |
|---|---|
| Group 1 | Sip:Group1@example.com |
| Group 2 | Sip:Group2@example.com |

Selection conditions:

| | |
|---|---|
| Condition 1 | Available currently |
| Condition 2 | Hobby is like playing bridge |
| Condition 3 | Middle bridge level |
| Condition 4 | Return two or more URIs |

Because Bob has joined group 1 and also meets the three conditions, Alice specifies that Bob is excluded from the returned result when submitting the request. Therefore, the complete request received by the CBUS server is: selecting URIs meeting conditions (condition 1 AND condition 2 AND condition 3) AND (Exclude Sip:Bob@example.com) from group 1 of URIs and group 2 of URIs.

The CBUS server first obtains specific member information in group 1 of URIs and group 2 of URIs from the shared group XDM server storing group information.

| **Group of URIs** | **Member** |
|---|---|
| **Sip:Group1@example.com** | Sip:Alx @example.com |
| | Sip: Bob@example.com |
| | Sip: Candy@example.com |
| **Sip:Group2@example.com** | Sip: David@example.com |
| | Sip: Emily@example.com |
| | Sip: Prank@example.com |

The CBUS server evaluates the obtained member information, deletes the URI of Bob, reserves URIs of the 5 remaining members, and then obtains their available information and hobby information from the presence server storing member information.

| **Member** | **Available?** | **Hobby = Bridge?** | **Level** |
|---|---|---|---|
| Sip:Alx@example.com | Yes | No | |
| Sip: Candy@example.com | No | Yes | Middle |
| Sip: David@example.com | Yes | Yes | High |
| Sip: Emily@example.com | Yes | Yes | Middle |
| Sip: Frank@example.com | No | No | |

In the available information and hobby information obtained by the CBUS server, only Sip: Emily@example.com meets all of condition 1, condition 2, and condition 3, which does not meet the restraint in condition 4 that at least two URIs are returned, and therefore, the CBUS server returns information indicating no user meets the conditions to the requester Alice.

### Example 4

Alice needs to send a short message notification to campers in a camping area, and expects to obtain, through the CBUS service, a list of URI(s) of people who are currently located in the camping area, but the returned list of URI(s) does not need to include the administrators Alice and Bob who are also currently located in the camping area.

The selection request submitted by Alice to the CBUS server specifies the selection condition that the current location is the camping area, and also specifies that the returned results exclude Sip:Alice@example.com and Sip:Bob@example.com.

After receiving the request submitted by the requester, the CBUS server obtains information of users who are currently located in the camping area from the location information server; the CBUS server evaluates the obtained information and request, deletes the URIs of Alice and Bob, and returns a final list of URI(s) meeting the requirements to the requester.

### Embodiment 4

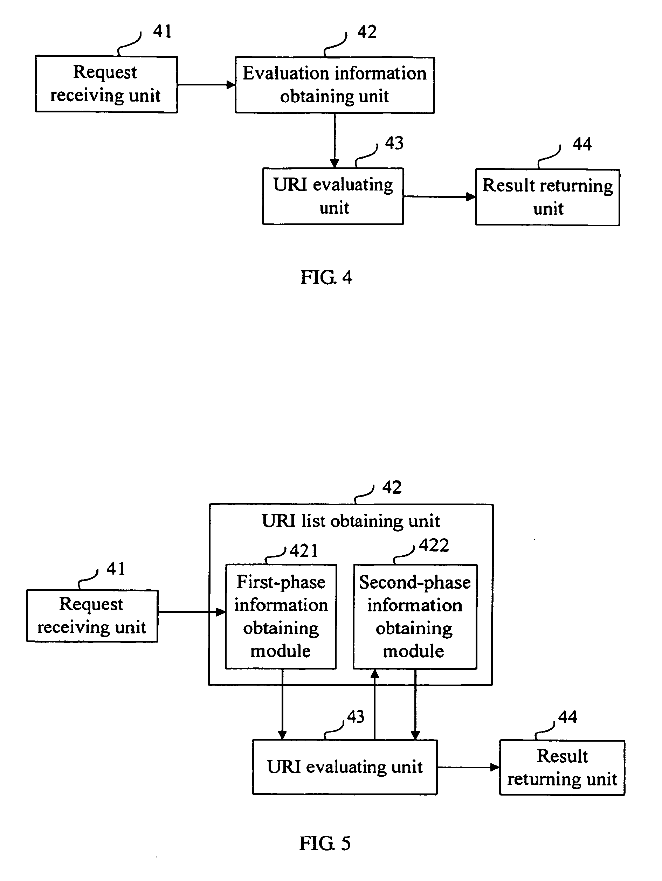

As shown in FIG. 4, an eighth embodiment of the present invention provides a CBUS server, including:
a request receiving unit 41, configured to receive a request submitted to the CBUS server by a requester for selecting a user, where the request for selecting a user carries selection conditions and parameter configurations of selection modes;
an evaluation information obtaining unit 42, configured to perform evaluation, according to the request for selecting a user, to obtain a list of URI(s) meeting all the selection conditions;
a URI evaluating unit 43, configured to: evaluate whether the URI of the requester is included in the list of URI(s) meeting all the selection conditions, and if the URI of the requester is included in the list of URI(s) meeting all the selection conditions, judge whether to delete the URI of the requester from the list of URI(s) according to the selection conditions submitted by the requester, and obtain a final list of URI(s); and
a result returning unit 44, configured to return the obtained final list of URI(s) to the requester.

The URI evaluating unit 43 is further configured to: when the request for selecting a user carries settings for excluding a specific URI from the returned results, evaluate whether the specific URI is included in the list of URI(s) meeting all the selection conditions, and if the specific URI is included in the list of URI(s) meeting all the selection conditions, delete the specific URI from the list of URI(s), and obtain a final list of URI(s).

As shown in FIG. 5, the evaluation information obtaining unit 42 includes one-phase or multi-phase information obtaining modules. The information obtaining module in each phase is configured to obtain and evaluate information to obtain a list of URI(s) meeting current selection conditions, and input the list of URI(s) to the URI evaluating unit to obtain the list of URI(s) meeting current requirements.

The URI evaluating unit 43 is further configured to input the list of URI(s), which meets current requirements and is input and obtained by a previous-phase information obtaining module, to a next-phase information obtaining module as the URI selection range.

As shown in FIG. 5, the evaluation information obtaining unit 42 includes two-phase information obtaining modules: a first-phase information obtaining module 421 and a second-phase information obtaining module 422. The first-phase information obtaining module 421 inputs the obtained list of URI(s) meeting current selection conditions to the URI evaluating unit 43, and the URI evaluating unit 43 performs evaluation to obtain a list of URI(s) meeting current requirements and uses the list of URI(s) as the URI selection range of the second-phase information obtaining module 422; the second-phase information obtaining module 422 obtains a list of URI(s) meeting all the selection conditions, and the URI evaluating unit 43 performs evaluation to obtain a final list of URI(s); the result returning unit 44 returns the final list of URI(s) to the requester.

In the CBUS server provided in the embodiment of the present invention, the URI evaluating unit 43 evaluates the list of URI(s) meeting all the selection conditions that is obtained by the evaluation information obtaining unit 42, deletes the specific URI, and returns the final list of URI(s) to the requester. The specific URI includes the URI of the requester or a URI that meets the selection conditions already known to the requester. In this way, the CBUS server resources for execution processing are saved and the user experience is improved. In addition, the CBUS server provided in the embodiment of the present invention may be applied in the scenario where the CBUS server needs to obtain a list of URI(s) meeting current selection conditions from the corresponding information servers in turn; the evaluation information obtaining unit 42 includes one-phase or multi-phase information obtaining modules; the information obtaining module in each phase is configured to: obtain a list of URI(s) meeting current selection conditions, input the list of URI(s) to the URI evaluating unit 43 to obtain the list of URI(s) meeting current requirements, and input the list of URI(s) meeting current requirements as the URI selection range to the next-phase information obtaining module. Thereby, the URI selection range of the CBUS server is narrowed gradually so that the requester can obtain a final list of URI(s) from the CBUS server, thus saving the CBUS server resources for execution processing and improving the user experience.

It should be noted that: the method provided in embodiments of the present invention may be embodied in the form of a software functional module, and when sold or used as a separate product, the method may be stored in a computer readable storage medium. The above storage medium may be a read only memory (ROM), a magnetic disk, or a compact disk-read only memory (CD-ROM).

In addition, the functional units in each embodiment of the present invention may be integrated in one processing module, or each unit exists separately, or two or more units are integrated in one processing module. The integrated module may be embodied in the form of hardware or a software functional module. If the integrated module is embodied in the form of a software functional module and is sold or used as a separate product, the integrated module may be stored in a computer readable storage medium. The above storage medium may be a ROM, a magnetic disk, or a CD-ROM.

The CBUS server and the method for optimizing results returned from the CBUS server according to the embodiments of the present invention have been described in detail. Embodiments of the present invention are only intended to facilitate the understanding of the method and idea of the present invention. It is apparent that those skilled in the art can make various modifications, variations, and replacements to the invention without departing from the scope of the invention.

## Claims

1. A method for optimizing results returned from a condition based URIs selection, CBUS, server, comprising:
receiving a request, submitted by a requester, for selecting a user, wherein the request for selecting a user carries selection conditions and settings for excluding a specific uniform resource identifier, URI, from the returned results (11);
obtaining a list of URI(s) meeting all the selection conditions according to the request for selecting a user (12),
evaluating whether the specific URI is included in the list of URI(s) meeting all the selection conditions, and if the specific URI is included in the list of URI(s) meeting all the selection conditions, deleting the specific URI from the list of URI(s), and obtaining a final list of URI(s) meeting requirements (13); and
returning the final list of URI(s) to the requester (14).

2. The method of claim 1, further comprising:
if it is necessary to obtain and evaluate information from different corresponding information servers in turn and obtain a list of URI(s) meeting current selection conditions, evaluating the obtained list of URI(s) meeting current selection conditions, obtaining a list of URI(s) meeting current requirements, and using the list of URI(s) as a URI selection range next time.

3. The method of claim 2, wherein the method for evaluating the obtained list of URI(s) meeting current selection conditions comprises:
evaluating whether the specific URI is included in the list of URI(s) meeting current selection conditions, and if the specific URI is included in the list of URI(s) meeting current selection conditions, deleting the specific URI from the list of URI(s), and obtaining a list of URI(s) meeting current requirements.

4. The method of claim 1, wherein:
in the request submitted by the requester for selecting a user, the requester may specify one or more groups of URIs as a selection range or does not specify the selection range.

5. The method of claim 1, wherein the specific URI may be a URI of the requester and/or one or more URIs other than the URI of the requester.

6. A condition based URIs selection, CBUS, server, comprising:
a request receiving unit (41), configured to receive a request, submitted by a requester, for selecting a user, wherein the request for selecting a user carries selection conditions and settings for excluding a specific uniform resource identifier (URI) from the returned results;
an evaluation information obtaining unit (42), configured to perform evaluation, according to the request for selecting a user, to obtain a list of URI(s) meeting all the selection conditions;
a URI evaluating unit (43), configured to: evaluate whether the specific URI is included in the list of URI(s) meeting all the selection conditions, and if the specific URI is included in the list of URI(s) meeting all the selection conditions, delete the specific URI from the list of URI(s), and obtain a final list of URI(s); and
a result returning unit (44), configured to return the final list of URI(s) to the requester.

7. The CBUS server of claim 6, wherein:
the evaluation information obtaining unit comprises one-phase or multi-phase information obtaining modules, wherein the information obtaining module in each phase is configured to perform evaluation to obtain a list of URI(s) meeting current selection conditions, and input the list of URI(s) to the URI evaluating unit to obtain the list of URI(s) meeting current requirements.

8. The CBUS server of claim 7, wherein:
the URI evaluating unit is further configured to input the list of URI(s), which meets current requirements and is input and obtained by a previous-phase information obtaining module, to a next-phase information obtaining module as a URI selection range.

## Patentansprüche

1. Verfahren zum Optimieren der von einem bedingungsbasierten URIs-Auswahl-Server, CBUS-Server, zurückgeschickten Ergebnisse, das Folgendes umfasst:
Empfangen einer von einem Anfordernden eingereichten Anforderung zum Auswählen eines Anwenders, wobei die Anforderung zum Auswählen eines Anwenders Auswahlbedingungen und Einstellungen zum Ausschließen eines spezifischen einheitlichen Betriebsmittel-Identifizierers, URI, aus den zurückgeschickten Ergebnissen führt (11);
Erhalten einer Liste von URI(s), die allen Auswahlbedingungen in Übereinstimmung mit der Anforderung zum Auswählen eines Anwenders entspricht, (12);
Auswerten, ob der spezifische URI in der Liste von URI(s), die allen Auswahlbedingungen entspricht, enthalten ist, und, falls der spezifische URI in der Liste von URI(s), die allen Auswahlbedingungen entspricht, enthalten ist, Löschen des spezifischen URI aus der Liste von URI(s) und Erhalten einer endgültigen Liste von URI(s), die den Anforderungen entspricht (13); und
Zurückschicken der endgültigen Liste von URI(s) an den Anfordernden.

2. Verfahren nach Anspruch 1, das ferner Folgendes umfasst:
falls es notwendig ist, Informationen von verschiedenen entsprechenden Informations-Servern der Reihe nach zu erhalten und auszuwerten und eine Liste von URI(s), die aktuellen Auswahlbedingungen entspricht, zu erhalten, Auswerten der erhaltenen Liste von URI(s), die den aktuellen Auswahlbedingungen entspricht, Erhalten einer Liste von URI(s), die den aktuellen Anforderungen entspricht, und das nächste Mal Verwenden der Liste von URI(s) als einen URI-Auswahlbereich.

3. Verfahren nach Anspruch 2, wobei das Verfahren zum Auswerten der erhaltenen Liste von URI(s), die den aktuellen Auswahlbedingungen entspricht, Folgendes umfasst:
Auswerten, ob der spezifische URI in der Liste von URI(s), die den aktuellen Auswahlbedingungen entspricht, enthalten ist, und, falls der spezifische URI in der Liste von URI(s), die den aktuellen Auswahlbedingungen entspricht, enthalten ist, Löschen des spezifischen URI aus der Liste von URI(s) und Erhalten einer Liste von URI(s), die den aktuellen Anforderungen entspricht.

4. Verfahren nach Anspruch 1, wobei:
der Anfordernde in der durch den Anfordernden eingereichten Anforderung zum Auswählen eines Anwenders eine oder mehrere Gruppen von URIs als einen Auswahlbereich spezifizieren kann oder den Auswahlbereich nicht spezifiziert.

5. Verfahren nach Anspruch 1, wobei der spezifische URI ein URI des Anfordernden und/oder ein oder mehrere URIs mit Ausnahme des URI des Anfordernden sein kann.

6. Bedingungsbasierter URIs-Auswahl-Server, CBUS-Server, der Folgendes umfasst:
eine Anforderungsempfangseinheit (41), die konfiguriert ist, eine von einem Anfordernden eingereichte Anforderung zum Auswählen eines Anwenders zu empfangen, wobei die Anforderung für das Auswählen eines Anwenders Auswahlbedingungen und Einstellungen zum Ausschließen eines spezifischen einheitlichen Betriebsmittel-Identifizierers, URI, aus den zurückgeschickten Ergebnissen führt;
eine Auswertungsinformations-Erhalteeinheit (42), die konfiguriert ist, eine Auswertung in Übereinstimmung mit der Anforderung zum Auswählen eines Anwenders auszuführen, um eine Liste von URI(s), die allen Auswahlbedingungen entspricht, zu erhalten;
eine URI-Auswerteeinheit (43), die konfiguriert ist: auszuwerten, ob der spezifische URI in der Liste von URI(s), die allen Auswahlbedingungen entspricht, enthalten ist, und, falls der spezifische URI in der Liste von URI(s), die allen Auswahlbedingungen entspricht, enthalten ist, den spezifischen URI aus der Liste von URI(s) zu löschen und eine endgültige Liste von URI(s) zu erhalten; und
eine Ergebniszurückschickeinheit (44), die konfiguriert ist, die endgültige Liste von URI(s) an den Anfordernden zurückzuschicken.

7. CBUS-Server nach Anspruch 6, wobei:
die Auswertungsinformations-Erhalteeinheit Einphasen- oder Mehrphasen-Informationserhaltemodule umfasst, wobei das Informationserhaltemodul in jeder Phase konfiguriert ist, eine Auswertung auszuführen, um eine Liste von URI(s), die den aktuellen Auswahlbedingungen entspricht, zu erhalten und die Liste von URI(s) in die URI-Auswerteeinheit einzugeben, um die Liste von URI(s), die den aktuellen Anforderungen entspricht, zu erhalten.

8. CBUS-Server nach Anspruch 7, wobei:
die URI-Auswerteeinheit ferner konfiguriert ist, die Liste von URI(s), die den aktuellen Anforderungen entspricht und durch ein Modul zum Erhalten der Informationen über die vorhergehende Phase eingegeben und erhalten wird, in ein Modul zum Erhalten der Informationen über die nächste Phase als einen URI-Auswahlbereich einzugeben.

## Revendications

1. Procédé pour optimiser des résultats renvoyés par un serveur de sélection conditionnelle d'URI, dit CBUS, le procédé comprenant les étapes consistant à :
recevoir une demande de sélection d'un utilisateur soumise par un demandeur, laquelle demande de sélection d'un utilisateur contient des conditions de sélection et des paramètres pour exclure un identifiant de ressource uniforme, dit URI, particulier des résultats renvoyés (11) ;
obtenir une liste d'URI remplissant toutes les conditions de sélection conformément à la demande de sélection d'un utilisateur (12) ;
évaluer si l'URI particulier est inclus dans la liste d'URI remplissant toutes les conditions de sélection et, si l'URI particulier est inclus dans la liste d'URI remplissant toutes les conditions de sélection, supprimer l'URI particulier de la liste d'URI et obtenir une liste finale d'URI remplissant des critères (13) ; et
renvoyer la liste finale d'URI au demandeur (14).

2. Procédé selon la revendication 1, comprenant en outre les étapes consistant à :
s'il s'avère nécessaire d'obtenir et d'évaluer des informations issues de différents serveurs d'informations correspondants successifs et d'obtenir une liste d'URI remplissant des conditions de sélection en cours, évaluer la liste obtenue d'URI remplissant des conditions de sélection en cours, obtenir une liste d'URI remplissant des critères en cours et utiliser la fois suivante la liste d'URI au titre d'intervalle de sélection d'URI.

3. Procédé selon la revendication 2, dans lequel l'étape consistant à évaluer la liste obtenue d'URI remplissant des conditions de sélection en cours comprend les étapes consistant à :
évaluer si l'URI particulier est inclus dans la liste d'URI remplissant des conditions de sélection en cours et, si l'URI particulier est inclus dans la liste d'URI remplissant des conditions de sélection en cours, supprimer l'URI particulier de la liste d'URI et obtenir une liste d'URI remplissant des critères en cours.

4. Procédé selon la revendication 1, dans lequel :
dans la demande de sélection d'un utilisateur soumise par le demandeur, le demandeur peut éventuellement préciser un ou plusieurs groupes d'URI au titre d'intervalle de sélection ou ne pas préciser l'intervalle de sélection.

5. Procédé selon la revendication 1, dans lequel l'URI particulier peut éventuellement être un URI du demandeur et/ou un ou plusieurs URI autre(s) que l'URI du demandeur.

6. Serveur de sélection conditionnelle d'URI, dit CBUS, comprenant :
une unité de réception de demande (41), conçue pour recevoir une demande de sélection d'un utilisateur soumise par un demandeur, laquelle demande de sélection d'un utilisateur contient des conditions de sélection et des paramètres pour exclure un identifiant de ressource uniforme, dit URI, particulier des résultats renvoyés ;
une unité d'obtention d'informations d'évaluation (42), conçue pour procéder à une évaluation, conformément à la demande de sélection d'un utilisateur, pour obtenir une liste d'URI remplissant toutes les conditions de sélection ;
une unité d'évaluation d'URI (43), conçue pour : évaluer si l'URI particulier est inclus dans la liste d'URI remplissant toutes les conditions de sélection et, si l'URI particulier est inclus dans la liste d'URI remplissant toutes les conditions de sélection, supprimer l'URI particulier de la liste d'URI et obtenir une liste finale d'URI ; et
une unité de renvoi de résultats (44), conçue pour renvoyer la liste finale d'URI au demandeur.

7. Serveur CBUS selon la revendication 6, dans lequel :
l'unité d'obtention d'informations d'évaluation comprend des modules d'obtention d'informations en une seule phase ou en plusieurs phases, le module d'obtention d'informations dans chaque phase étant conçu pour procéder à une évaluation pour obtenir une liste d'URI remplissant des conditions de sélection en cours et appliquer la liste d'URI à l'entrée de l'unité d'évaluation d'URI pour obtenir la liste d'URI remplissant des critères en cours.

8. Serveur CBUS selon la revendication 7, dans lequel :
l'unité d'évaluation d'URI est en outre conçue pour appliquer la liste d'URI, qui remplit des critères en cours et qui est appliquée et obtenue par un module d'obtention d'informations en phase précédente, à l'entrée d'un module d'obtention d'informations en phase suivante au titre d'intervalle de sélection d'URI.
